# EUROPEAN PATENT APPLICATION

(11) **EP 4 024 206 A1**
(43) Date of publication of application: **06.07.2022**
(21) Application number: 21215367.0
(22) Date of filing: 17.12.2021
(51) Int. Cl.: G06F 9/30, G06F 9/38, G06N 3/04, G06N 3/063

(54) **COMPUTING DEVICE AND METHOD FOR REUSING DATA**

(30) Priority: 30.12.2020 CN 202011605631
(71) Applicant: Shanghai Biren Technology Co.,Ltd, 201114 Shanghai (CN)
(72) Inventor: ZHANG, YuFei, deceased (US); SHU, Hao, Shanghai, 201114 (CN)
(74) Representative: Becker, Eberhard

(57) **Abstract**

A computing device (300) and a method for reusing data are provided. The computing device (300) includes a general register (310) and an arithmetic unit (320) coupled to the general register (310). The arithmetic unit (320) includes a data reuse unit (321), which is coupled to multiple dot product data units. The data reuse unit (321) is configured to read from the general register (310) and temporarily store a data set used for multiple convolution operations, and determine multiple data subsets from the data set to be respectively inputted into the multiple dot product data units. Two data subsets inputted into two adjacent dot product data unit include a portion of the same data. Each of the multiple dot product data units is configured to perform a dot product operation on the inputted data subset, so as to generate a dot product operation result.

## Description

### BACKGROUND

### Technical Field

This disclosure relates to a computer field, and in particular to a computing device and a method for reusing data.

### Description of Related Art

A convolutional neural network is a type of feedforward neural network that includes convolution calculations, has a deep structure, and is one of the representative algorithms of deep learning. Under normal circumstances, a convolutional neural network is formed by several convolutional layers, pooling layers, and fully connected layers. The convolutional layers and the pooling layers occupy most of the computing, storage and bandwidth resources. Therefore, the execution efficiency of the convolutional layers and the pooling layers largely determines the efficiency of the entire convolutional neural network.

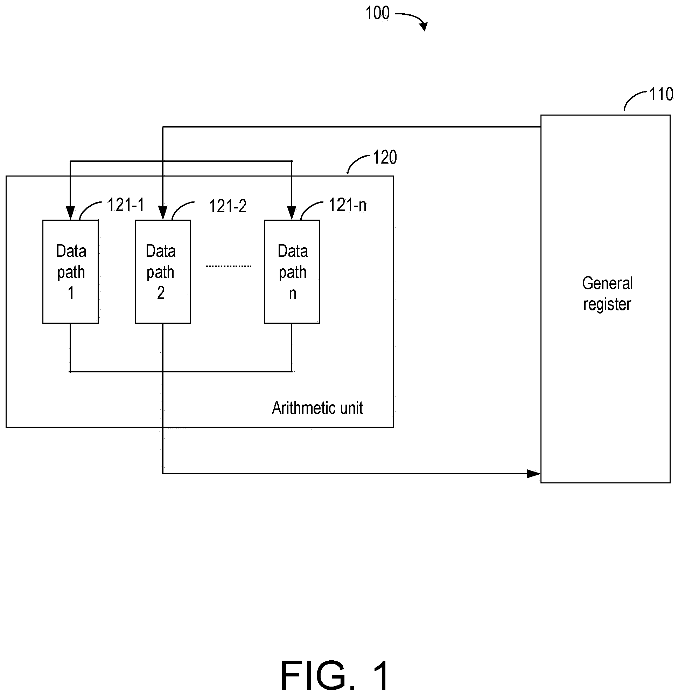

With reference to FIG. 1, FIG. 1 is a schematic block diagram of a stream processor 100 according to the related art. As shown in FIG. 1, the stream processor 100 includes a general register 110 and an arithmetic unit 120. The general register 110 is used to store data used during a calculation process and an operation result. The arithmetic unit 120 is used to perform a mathematical operation.

The arithmetic unit 120 includes multiple data paths 121-1 to 121-n with the same structure. Input data, mathematical operations, and output result of each data path are independent of each other. In addition, the arithmetic unit 120 controls data reading, mathematical operations, and result writing of all data paths.

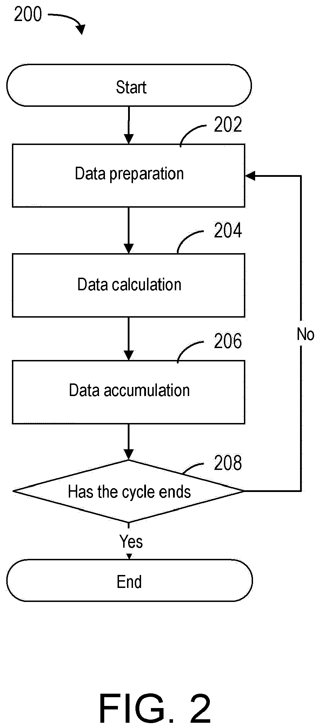

With reference to FIG. 2, FIG. 2 is a flow chart of a convolution operation performed by an arithmetic unit of a stream processor according to the related art. According to a convolution kernel size M×N, the arithmetic unit of the stream processor executes M×N operation cycles, and outputs a final operation result after all the operation cycles are executed. Each of the data path processes a pixel. Each of the operation cycles includes the following steps. A data preparation Step 202, a data calculation Step 204, and a data accumulation Step 206. Each of these steps contains at least multiple instructions.

The data preparation Step 202 is used to prepare the input data required for a current operation cycle. The arithmetic unit 120 completes an operation such as data splicing and data shifting, and writes the input data to the general register 110 by executing a corresponding instruction.

The data calculation Step 204 is used for a mathematical calculation such as convolution and pooling. The arithmetic unit 120 reads the input data from the general register 110, completes the mathematical calculation, and outputs an intermediate result to the general register 110 by executing a corresponding instruction.

The data accumulation Step 206 is used to accumulate the intermediate result. The arithmetic unit reads the intermediate result from the general register 110, completes the cumulative operation, and outputs the intermediate result or a final result to the general register 110 by executing a corresponding instruction.

Step 208 after the data accumulation Step 206 is used to determine whether a cycle has ended. When the current cumulative operation is the last operation cycle (that is, the cycle has ended), a result outputted by the operation unit 120 is the final operation result, otherwise, the result outputted by the operation unit 120 is an intermediate result, and the flow returns to the data preparation Step 202.

An execution flow of each of the instructions in the stream processor arithmetic unit includes three steps: data reading, a mathematical operation; and data writing.

However, the related art faces the following issues. As each of the operation cycle may only complete a mathematical operation of a single pixel point, a large number of cycles is required for a convolution and pooling operation, therefore having a low execution efficiency. As each of the operation cycles contains multiple steps, and each step requires multiple instructions, the execution efficiency is low. As data is not shared or reused between the operation cycles, a large number of memory reading and writing operations are required, and the power consumption is high.

### SUMMARY

This disclosure provides a computing device and a method for reusing data, which can improve the efficiency of a convolution operation.

A computing device is provided according to the disclosure. The computing device includes a general register and an arithmetic unit coupled to the general register. The arithmetic unit includes a data reuse unit, and the data reuse unit is coupled to multiple dot product data units. The data reuse unit is configured to read from the general register and temporarily store a data set used for multiple convolution operations, and the data reuse unit determines multiple data subsets from the data set, so as to respectively input the multiple data subsets into multiple dot product data units. The two data subsets inputted into two adjacent dot product data units include a portion of the same data. In addition, each dot product data unit of the multiple dot product data units is configured to perform a dot product operation on an inputted data subset, so as to generate a dot product operation result.

A method for reusing data is provided according to the disclosure. The method includes the following steps. A data reuse unit reads from a general register and temporarily stores a data set used for multiple convolution operations. The data reuse unit determines multiple data subsets from the data set, so as to respectively input the multiple data subsets into multiple dot product data units, in which the two data subsets inputted into two adjacent dot product data units include a portion of the same data. In addition, each dot product data unit of the multiple dot product data units performs a dot product operation on an inputted data subset, so as to generate a dot product operation result.

It should be understood that the content described in this section is not intended to identify key or important features of the embodiments of the disclosure, nor is it intended to limit the scope of the disclosure. Other features of the disclosure may be easily understood through the following description.

### BRIEF DESCRIPTION OF THE DRAWINGS

To make the above features and advantages more comprehensible, several embodiments accompanied by drawings are described in detail as follows. In the drawings, the same or similar reference numerals indicate the same or similar elements.
FIG. 1 is a schematic block diagram of a stream processor 100 according to the related art.
FIG. 2 is a flowchart of a method 200 for performing a convolution operation by an arithmetic unit of a stream processor according to the related art.
FIG. 3 is a schematic block diagram of a computing device 300 according to an embodiment of the disclosure.
FIG. 4 is a schematic block diagram of a dot product data unit 400 according to an embodiment of the disclosure.
FIG. 5 is a schematic diagram of a method 500 for reusing data according to an embodiment of the disclosure.

### DESCRIPTION OF THE EMBODIMENTS

Exemplary embodiments of the disclosure are described with reference to the accompanying drawings as follows, in which various details of the embodiments of the disclosure are included to facilitate understanding. However, they should be regarded as merely exemplary. Therefore, those of ordinary skill in the art should recognize that various changes and modifications may be made to the embodiments described herein without departing from the scope and spirit of the disclosure. Likewise, for clarity and conciseness, descriptions of well-known functions and structures are omitted in the following description.

The term "including" and variations thereof used herein open-ended inclusion, that is, "including but not limited to". Unless specifically stated, the term "or" means "and/or". The term "based on" means "at least partially based on". The terms "an exemplary embodiment" and "an embodiment" mean "at least one exemplary embodiment". The term "another embodiment" means "at least one additional embodiment". Terms such as "first", "second", etc. may refer to different or the same objects. The following may also include other explicit and implicit definitions.

It should be understood that when a component is described as being "connected to" or "coupled to" to another component, it may be directly connected or coupled to another component, and there may be an intermediate component. Conversely, when a component is described as being "directly connected to" or "directly coupled to" another component, there is no intermediate component. Other words used to describe a relationship between components may also be interpreted in a similar manner, such as "between" and "directly between", or "adjacent to" and "directly adjacent to" and so on.

As mentioned above, the related art faces the following issues. As each of the operation cycle may only complete a mathematical operation of a single pixel point, a large number of cycles is required for a convolution and pooling operation, therefore having a low execution efficiency. As each of the operation cycles contains multiple steps, and each step requires multiple instructions, the execution efficiency is low. As data is not shared or reused between the operation cycles, a large number of memory reading and writing operations are required, and the power consumption is high.

Therefore, this disclosure provides a computing device and a method for reusing data.

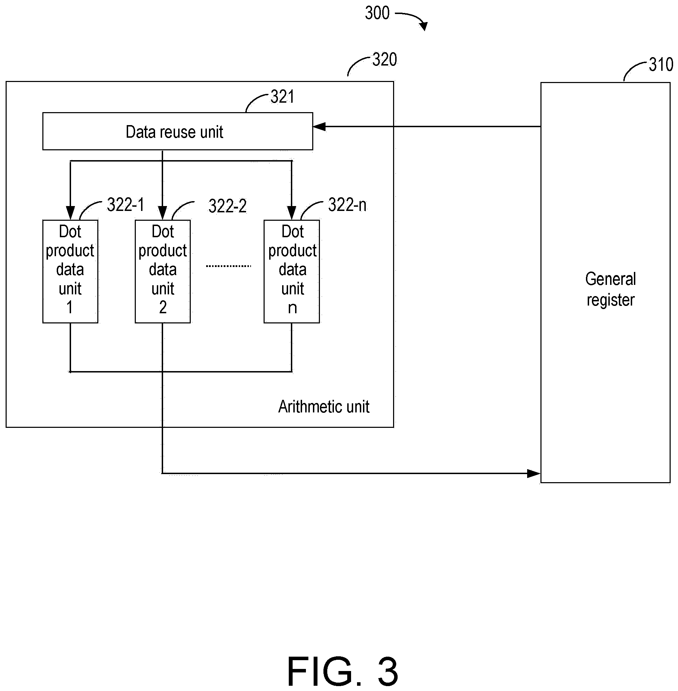

FIG. 3 is a schematic block diagram of a computing device 300 according to an embodiment of the disclosure. As shown in FIG. 3, the computing device 300 includes a general register 310 and an arithmetic unit 320. The computing device 300 includes, but is not limited to, a stream processor, for example.

The general register 310 is used to store data used in a calculation process and an operation result. The data and the operation result include, but are not limited to, numerical values, such as a pixel matrix, a convolution operation result matrix, a convolution kernel, and so on. There may be one or more general registers 310.

The arithmetic unit 320 is coupled to the general register 310. The arithmetic unit 320 may include a data reuse unit 321 and multiple dot product data units 322-1 to 322-n.

The data reuse unit 321 is coupled with the general register 310 and the multiple dot product data units 322-1 to 322-n. The data reuse unit 321 is configured to read from the general register 310 and temporarily store a data set used for multiple convolution operations. The data reuse unit 321 is also configured to obtain multiple data subsets from the data set, so as to respectively input the multiple data subsets into the multiple dot product data units 322-1 to 322-n. For example, the data reuse unit 321 may determine the multiple data subsets by splicing and shifting the data in the data set, so as to complete reusing of the inputted data between multiple mathematical operations. Each of the data subsets may include multiple pairs of data. The multiple pairs of data may be associated with multiple pixels. The data reuse unit 321 is also configured to respectively input the multiple data subsets into the multiple dot product data units 322-1 to 322-n.

Each of the multiple dot product data units 322-1 to 322-n receives a data subset from the data reuse unit 321. Each of the dot product data units is configured to perform a dot product operation on the data subset, so as to generate a dot product operation result. Each of the dot product data units is further configured to generate a current cumulative result of the dot product data unit based on the generated dot product operation result and a previous cumulative result of the dot product data unit. For example, adding the dot product operation result and the previous cumulative result, so as to generate the current cumulative result. Each of the dot product data units is further configured to write the current cumulative result of the dot product data unit to the general register 310 to serve as a convolution operation result when it is determined that the convolution operation has ended.

Each of the dot product data units may be associated with a convolution operation. For example, performing a 3×3 convolution operation on a 5×5 pixel matrix, is to perform the convolution operation on a 3×3 pixel matrix in the 5×5 pixel matrix and a 3×3 convolution kernel to obtain the convolution operation result, which may be considered as an one-time convolution operation.

Two adjacent dot product data units may be configured to be used for two adjacent convolution operations. Two data subsets inputted into the two adjacent dot product data units that are associated with each other may include a portion of the same data, thereby allowing a portion of output of the data reuse unit 321 to be shared, so as to implement data reusing. This is because the two adjacent convolution operations have a portion of the same pixels, therefore allowing data reusing. The dot product data unit may be controlled by the arithmetic unit to perform data reading, mathematical operations, and result writing.

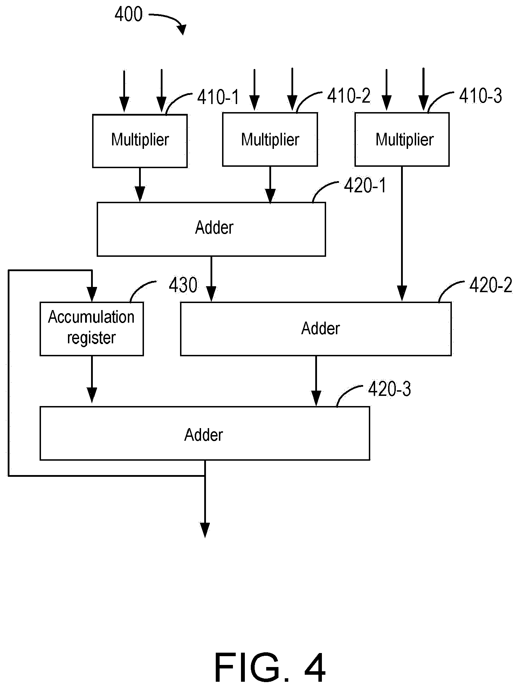

FIG. 4 is a schematic block diagram of a dot product data unit 400 that performs a dot product operation on three pairs of data according to an embodiment of the disclosure. As shown in FIG. 4, the dot product data unit 400 includes three multipliers 410-1 to 410-3, three adders 420-1 to 420-3, and an accumulation register 430. It should be understood that the three multipliers and the three adders are only for illustrative purposes, and the dot product operation path 400 may include additional or fewer multipliers and adders, thereby performing the dot product operation on more or less pairs of data.

Each of the multipliers 410 is configured to multiply one pair of inputted data, so as to generate a product, and input the product to a corresponding adder 420. A pair of data includes, for example, a pixel and a weight in the convolution kernel.

The adder 420-1 adds the products outputted by the multipliers 410-1 and 410-2, so as to generate a first addition result, and inputs the first addition result to the adder 420-2.

The adder 420-2 adds the first addition result outputted by the adder 420-1 and the product outputted by the multiplier 410-3 to generate a second addition result, and inputs the second addition result to the adder 420-3. The generated second addition result represents the dot product operation result of the three pairs of data.

The adder 420-3 adds the second addition result outputted by the adder 420-2 and a previous cumulative result outputted by the accumulation register 430, so as to generate a third addition result, and outputs the third addition result to the accumulation register 430. The third addition result represents a current cumulative result of the convolution operation.

The accumulation register 430 is configured to temporarily store the current cumulative result.

Taking a 5×5 convolution operation as an example, it has to perform dot product operation processing on 25 pairs of data (each pair of data includes a pixel value and a corresponding weight in the convolution kernel), so as to generate a convolution operation result. The dot product data unit calculates three pairs of data in a cycle, and a maximum number of 25/3 = 9 cycles may generate the convolution operation result. As compared to the related art that requires 25 cycles, the number of cycles is greatly reduced.

In general, for a M×N convolution size, using the dot product data unit that performs the dot product operation on L pixels only requires (M/L)^{∗}N cycles, which greatly reduces the number of operation cycles as compared to the M^{∗}N cycles required by the related art.

As a result, the number of operation cycles of the convolution operation may be reduced and the calculation efficiency may be improved by using the dot product data units, data reading of the general-purpose register is reduced and the power consumption is reduced by using the data reuse unit, and the requirement for data bandwidth is reduced and the area is reduced by sharing the input data among the dot product data units.

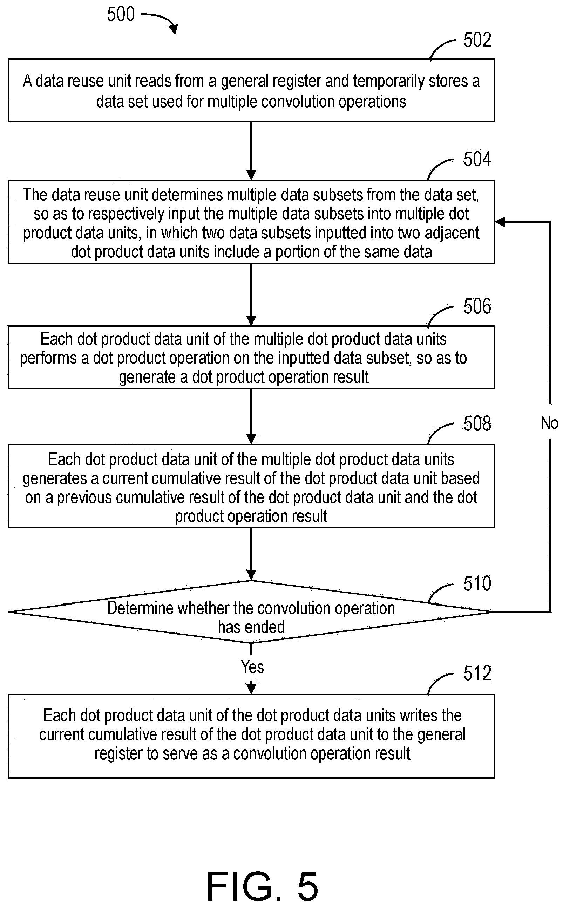

FIG. 5 shows a method for reusing data according to an embodiment of the disclosure. For example, a method 500 may be executed by the computing device 110 shown in FIG. 3. It should be understood that the method 500 may further include additional blocks not shown and/or the shown blocks may be omitted, and the scope of the disclosure is not limited thereto.

In Block 502, the data reuse unit 321 reads from the general register 310 and temporarily stores the data set used for the multiple convolution operations.

In Block 504, the data reuse unit 321 determines the multiple data subsets from the data set, so as to respectively input the multiple data subsets into the multiple dot product data units 322-1 to 322-n. The two data subsets inputted into the two adjacent dot product data units include a portion of the same data.

In Block 506, each dot product data unit of the multiple dot product data units 322-1 to 322-n performs the dot product operation on the inputted data subset, so as to generate the dot product operation result.

In Block 508, each dot product data unit of the multiple dot product data units 322-1 to 322-n generates the current cumulative result of the dot product data unit based on the previous cumulative result of the dot product data unit and the dot product operation result.

In Block 510, each dot product data unit of the multiple dot product data units write the current cumulative result to the general register to serve as the convolution operation result when it is determined that the convolution operation has ended.

In Block 510, it is determined whether the convolution operation has ended.

In Block 512, each dot product data unit of the dot product data units 322-1 to 322-n writes the current cumulative result of the dot product data unit to the general register 310 to serve as the convolution operation result when it is determined in the Block 510 that the convolution operation is over. Otherwise, return to the Block 504 to continue performing the cycle on the data to be calculated in the convolution operation. Each operation cycle includes the following steps. A data preparation step (such as the Block 504), a data calculation step (such as the Block 506), and a data cumulative step (such as the Block 508), which may be completed by a single instruction.

As a result, the number of operation cycles of the convolution operation may be reduced and the calculation efficiency may be improved by using the dot product data units, data reading of the general-purpose register is reduced and the power consumption is reduced by using the data reuse unit, and the requirement for data bandwidth is reduced and the area is reduced by sharing the input data among the dot product data units.

The following is an example of performing a 3×3 convolution operation on a 5×5 pixel matrix. It should be understood that this is only exemplary, and the disclosure does not limit the size of the pixel matrix and the size of the convolution kernel.

**Table 1: 5×5 pixel matrix**

| | | | | |
|---|---|---|---|---|
| A1 | A2 | A3 | A4 | A5 |
| A6 | A7 | A8 | A9 | A10 |
| A11 | A12 | A13 | A14 | A15 |
| A16 | A17 | A18 | A19 | A20 |
| A21 | A22 | A23 | A24 | A25 |

**Table 2: 3×3 convolution kernel**

| | | |
|---|---|---|
| B1 | B2 | B3 |
| B4 | B5 | B6 |
| B7 | B8 | B9 |

The data reuse unit 321 may read from the general register 310 and temporarily store the above-mentioned 5×5 pixel matrix and the 3×3 convolution kernel.

The dot product data unit 322-1 is configured to perform a convolution operation (hereinafter referred to as a first convolution operation) on pixel points A1, A2, A3, A6, A7, A8, A11, A12, and A13 with a 3×3 convolution kernel. The adjacent dot product data unit 322-2 is configured to perform a convolution operation (hereinafter referred to as a second convolution operation) on pixel points A2, A3, A4, A7, A8, A9, A12, A13, and A14 with a 3×3 convolution kernel. It may be seen that the dot product data units 322-1 and 322-2 may reuse the pixels A2, A3, A7, A8, A12, and A13.

For example, each of the dot product data units performs a dot product operation on three pixels. It should be understood that this is only exemplary, and the disclosure does not limit the number of pixels targeted by each of the dot product data units.

In a first cycle of the first convolution operation, the data reuse unit 321 determines and inputs three pairs of data (A1, B1), (A2, B2), and (A3, B3) from the 5×5 pixel matrix and the 3×3 convolution kernel to the dot product data unit 322-1, and the dot product data unit 322-1 may perform a dot product operation of A1^{∗}B1+A2^{∗}B2+A3^{∗}B3 and use A1^{∗}B1+A2^{∗}B2+A3^{∗}B3 to serve as a cumulative result.

In a second cycle of the first convolution operation, the data reuse unit 321 determines and inputs three pairs of data (A6, B4), (A7, B5), and (A8, B6) from the 5×5 pixel matrix and the 3×3 convolution kernel to the dot product data unit 322-1, and the dot product data unit 322-1 may perform a dot product calculation of A6^{∗}B4+A7^{∗}B5+A8^{∗}B6 and add the cumulative result of A1^{∗}B1+A2^{∗}B2+A3^{∗}B3 to A6^{∗}B4+A7^{∗}B5+A8^{∗}B6, so as to obtain a new cumulative result of A1^{∗}B1+A2^{∗}B2+A3^{∗}B3+A6^{∗}B4+A7^{∗}B5+A8^{∗}B6.

In a third cycle of the first convolution operation, the data reuse unit 321 determines and inputs three pairs of data (A11, B7), (A12, B8), and (A13, B9) from the 5×5 pixel matrix and the 3×3 convolution kernel to the dot product data unit 322-1, and the dot product data unit 322-1 may perform a dot product calculation of A11^{∗}B7+A12^{∗}B8+A13^{∗}B9 and add the cumulative result of A1^{∗}B1+A2^{∗}B2+A3^{∗}B3+A6^{∗}B4+A7^{∗}B5+A8^{∗}B6, so as to obtain a new cumulative result of A1^{∗}B1+A2^{∗}B2+A3^{∗}B3+A6^{∗}B4+A7^{∗}B5+A8^{∗}B6+A11^{∗}B7+A12^{∗}B8+A13^{∗}B9. At this point, the first convolution operation ends, and the dot product data unit 322-1 may use the cumulative result of A1^{∗}B1+A2^{∗}B2+A3^{∗}B3+A6^{∗}B4+A7^{∗}B5+A8^{∗}B6+A11^{∗}B7+A12^{∗}B8+A13^{∗}B9 to serve as a first convolution operation result and write it to the general register 310.

Similarly, in a first cycle of the second convolution operation, the data reuse unit 321 reuses the two pixels A2 and A3, and inputs three pairs of data (A2, B1), (A3, B2), and (A4, B3) to the dot product data unit 322-2, and the dot product data unit 322-2 may perform a dot product calculation of A2^{∗}B1+A3^{∗}B2+A4^{∗}B3 and use A2^{∗}B1+A3^{∗}B2+A4^{∗}B3 to serve as a cumulative result.

In a second cycle of the second convolution operation, the data reuse unit 321 reuses the two pixels A7 and A8, and inputs three pairs of data (A7, B4), (A8, B5), and (A9, B6) to the dot product data unit 322-2, and the dot product data unit 322-2 may perform a dot product calculation of A7^{∗}B4+A8^{∗}B5+A9^{∗}B6 and add the cumulative result of A2^{∗}B1+A3^{∗}B2+A4^{∗}B3 to A7^{∗}B4+A8^{∗}B5+A9^{∗}B6, so as to obtain a new cumulative result of A2^{∗}B1+A3^{∗}B2+A4^{∗}B3+A7^{∗}B4+A8^{∗}B5+A9^{∗}B6.

In a third cycle of the second convolution operation, the data reuse unit 321 reuses the two pixels A12 and A13, and inputs three pairs of data (A12, B7), (A13, B8), and (A14, B9) to the dot product data unit 322-2, and the dot product data unit 322-2 may perform a dot product calculation of A12^{∗}B7+A13^{∗}B8+A14^{∗}B9 and add the cumulative result of A2^{∗}B1+A3^{∗}B2+A4^{∗}B3+A7^{∗}B4+A8^{∗}B5+A9^{∗}B6, so as to obtain a new cumulative result of A2^{∗}B1+A3^{∗}B2+A4^{∗}B3+A7^{∗}B4+A8^{∗}B5+A9^{∗}B6+A12^{∗}B7+A13^{∗}B8+A14^{∗}B9. At this point, the second convolution operation ends, and the dot product data unit 322-2 may use the cumulative result of A2^{∗}B1+A3^{∗}B2+A4^{∗}B3+A7^{∗}B4+A8^{∗}B5+A9^{∗}B6+ A12^{∗}B7+A13^{∗}B8+A14^{∗}B9 to serve as a second convolution operation result and write it to the general register 310.

Those skilled in the art should understand that the method steps described herein are not only limited to the order illustrated in the drawings, but may be executed in any other feasible order.

## Claims

1. A computing device (300), comprising:
a general register (310); and
an arithmetic unit (320), coupled to the general register (310), wherein the arithmetic unit (320) comprises:
a data reuse unit (321), coupled to a plurality of dot product data units (322-1 to 322-n, 400), wherein the data reuse unit (321) is configured to read from the general register (310) and temporarily store a data set used for a plurality of convolution operations, and determines a plurality of data subsets from the data set, so as to respectively input the plurality of data subsets into the plurality of dot product data units (322-1 to 322-n, 400), wherein two data subsets inputted into two adjacent dot product data units (322-1 to 322-n, 400) comprise a portion of the same data; and
the plurality of dot product data units (322-1 to 322-n, 400), wherein each dot product data unit (322-1 to 322-n, 400) of the plurality of dot product data units (322-1 to 322-n, 400) is configured to perform a dot product operation on an inputted data subset, so as to generate a dot product operation result.

2. The computing device (300) according to claim 1, wherein the each dot product data unit (322-1 to 322-n, 400) of the plurality of dot product data units (322-1 to 322-n, 400) is further configured to generate a current cumulative result of the dot product data unit (322-1 to 322-n, 400) based on a previous cumulative result of the dot product data unit (322-1 to 322-n, 400) and the dot product operation result.

3. The computing device (300) according to claim 2, wherein the each dot product data unit (322-1 to 322-n, 400) of the plurality of dot product data units (322-1 to 322-n, 400) is further configured to write the current cumulative result to the general register (310) to serve as a convolution operation result when it is determined that a convolution operation has ended.

4. The computing device (300) according to any one of the claims 1 to 3, wherein each data subset of the plurality of data subsets comprises a plurality of pairs of data.

5. The computing device (300) according to any one of the claims 1 to 4, wherein the each dot product data unit (322-1 to 322-n, 400) of the plurality of dot product data units (322-1 to 322-n, 400) comprises a plurality of multipliers (410-1 to 410-3), a plurality of adders (420-1 to 420-3), and an accumulation register (430).

6. The computing device (300) according to any one of the claims 1 to 5, wherein the computing device (300) is a stream processor.

7. A method for reusing data, comprising:
reading from a general register (310) and temporarily storing a data set used for a plurality of convolution operations by a data reuse unit (321);
determining a plurality of data subsets from the data set, so as to respectively input the plurality of data subsets into a plurality of dot product data units (322-1 to 322-n, 400) by the data reuse unit (321), wherein two data subsets inputted into two adjacent dot product data units (322-1 to 322-n, 400) comprise a portion of the same data; and
performing a dot product operation on an inputted data subset by each dot product data unit (322-1 to 322-n, 400) of the plurality of dot product data units (322-1 to 322-n, 400), so as to generate a dot product operation result.

8. The method according to claim 7, further comprising:
generating a current cumulative result of the dot product data unit (322-1 to 322-n, 400) based on a previous cumulative result of the dot product data unit (322-1 to 322-n, 400) and the dot product operation result by the each dot product data unit (322-1 to 322-n, 400) of the plurality of dot product data units (322-1 to 322-n, 400).

9. The method according to claim 8, further comprising:
writing the current cumulative result to the general register (310) to serve as a convolution operation result by the each dot product data unit (322-1 to 322-n, 400) of the plurality of dot product data units (322-1 to 322-n, 400) when it is determined that a convolution operation has ended.

10. The method according to any one of the claims 7 to 9, wherein each data subset of the plurality of data subsets comprises a plurality of pairs of data.
